## Europäisches Patentamt
## European Patent Office
## Office européen des brevets

(11) Veröffentlichungsnummer: **0 230 559 B1**

# EUROPÄISCHE PATENTSCHRIFT

(45) Veröffentlichungstag der Patentschrift: **13.03.91**  (51) Int. Cl.5: **H04L 7/02**

(21) Anmeldenummer: **86116602.3**

(22) Anmeldetag: **28.11.86**

(54) Verfahren zur Taktsynchronisation eines Signalempfängers.

(30) Priorität: **17.01.86 CH 176/86**

(43) Veröffentlichungstag der Anmeldung:
**05.08.87 Patentblatt 87/32**

(45) Bekanntmachung des Hinweises auf die
Patenterteilung:
**13.03.91 Patentblatt 91/11**

(84) Benannte Vertragsstaaten:
**CH DE FR GB LI NL SE**

(56) Entgegenhaltungen:
**FR-A- 2 493 646**

(73) Patentinhaber: **BBC Brown Boveri AG**
**Haselstrasse**
**CH-5401 Baden(CH)**

(72) Erfinder: **Braun, Walter, Dr.**
**Zentralstrasse 137**
**CH-5430 Wettingen(CH)**
Erfinder: **Habermann, Joachim, Dr.**
**Jurastrasse 15b**
**CH-5406 Rütihof-Baden(CH)**

## Beschreibung

Die vorliegende Erfindung betrifft ein Verfahren zur Taktsynchronisation eines Signalempfängers bezüglich eines mit Daten in Form eines Basisbandsignals modulierten Empfangssignals, wobei das Basisbandsignal im ungestörten Zustand zu bestimmten, mit einer vorgegebenen Symboldauer periodischen Zeitpunkten eine Mehrzahl von zugelassenen Werten einnehmen kann, und wobei die erzeugende Datensequenz derart verwürfelt ist, dass Uebergänge zwischen den zugelassenen Werten in beliebigen Zeitfenstern weitgehend gleich häufig auftreten.

Das ein Basisbandsignal enthaltende Empfangssignal in einem Nachrichtenübertragungssystem gelangt aufgrund einer nichtidealen Uebertragung im allgemeinen verrauscht und verzerrt auf den Signalempfänger. Handelt es sich bei dem Signalempfänger beispielsweise um einen Funkempfänger und ist der zugehörige Nachrichtenweg z.B. ein MobilfunkKanal, treten beim Empfangssignal aufgrund von Mehrwegausbreitung erhebliche und rasch variierende Verzerrungen auf. Bei der Uebertragung digitaler Daten über einen solchen Kanal ist es für die Extraktion der Daten aus dem Empfangssignal wichtig, den optimalen Abtastzeitpunkt für jedes der übertragenen Symbole praktisch verzögerungsfrei und sicher finden zu können.

Bekannte Verfahren zur Taktsynchronisation, d.h. zur Einstellung auf den jeweils richtigen Abtastzeitpunkt, beruhen auf der Detektion der Nulldurchgänge des Empfangssignals oder auf einer nichtlinearen Umformung (z .B. einer Quadrierung) mit nachfolgender schmalbandiger Filterung.

Das erste dieser Verfahren leidet darunter, dass sich bei verzerrten Signalen der optimale Abtastzeitpunkt gegenüber dem Zeitpunkt des Nulldurchgangs verschieben kann.

Beim zweiten dieser Verfahren besteht ebenfalls keine starre Beziehung zwischen der Phase des gefilterten Signals und dem optimalen Abtastzeitpunkt. Darüber hinaus führt die schmalbandige Filterung zu erheblichen Verzögerungen.

Aus der Druckschrift **FR-A-2 493 646** ist ein Verfahren zur Synchronisation eines Empfängers bezüglich eines analogen Signals, welches digitale Daten in modulierter Form beinhaltet, bekannt. Das Ziel liegt im wesentlichen darin, die klassische PLL Synchronisation durch eine mittels digitaler Bausteine realisierbare Synchronisation zu ersetzen. Zu diesem Zweck wird die Korrelation zwischen dem Empfangsignal und dem Empfängertaktsignal bestimmt. Der Abtastzeitpunkt wird aus dem grössten Korrelationswert abgeleitet.

Es ist daher Aufgabe der vorliegenden Erfindung, ein Verfahren zur Taktsynchronisation eines Signalempfängers zu finden, welches direkt und ohne Umwege über andere Messgrössen die Bestimmung des optimalen Abtastzeitpunktes gestattet und damit die Ungenauigkeiten der bekannten Verfahren vermeidet.

Die Aufgabe wird bei einem Verfahren der eingangs genannten Art durch die Merkmale aus dem Kennzeichen des Anspruchs 1 gelöst.

Das erfindungsgemässe Verfahren nützt direkt die Eigenschaften des optimalen Abtastzeitpunktes aus. Dieser Punkt ist nämlich dadurch definiert, dass das rauschfreie, unverzerrte demodulierte Empfangssignal jeweils in diesem Punkt eines Symbolintervalls einen von wenigen zugelassenen Werten annimmt. Bei verzerrten Signalen werden diese zugelassenen Werte nicht exakt angenommen. Die tatsächliche Abweichung ist aber minimal.

Das Minimum der Abweichung zwischen zugelassenem Wert und tatsächlichem Signalwert zum optimalen Abtastzeitpunkt wird nach dem erfindungsgemässen Verfahren dadurch bestimmt, dass in N aufeinanderfolgenden Zeitfenstern von der Länge der Symboldauer jeweils in K Subintervallen pro Zeitfenster das demodulierte Empfangssignal abgetastet wird.

Aus den N Abtastwerten entsprechender Subintervalle jedes der N Zeitfenster wird die Streuung dieser Abtastwerte ermittelt. Die ermittelten K Streuungen werden dann untereinander verglichen und der kleinste dieser Streuungswerte bestimmt.

Aus der zeitlichen Lage dieses kleinsten Streuungswertes, d.h. aus demjenigen der K Subintervalle, das für jedes Zeitfenster den entsprechenden Beitrag zur Berechnung dieser kleinsten Streuung beigetragen hat, kann nun der optimale Abtastzeitpunkt abgeleitet werden. Je kleiner hierbei die Streuung ist, umso geringer ist auch der Fehler bei der Auswertung des Empfangssignals.

Nachfolgend soll nun im Zusammenhang mit der Zeichnung die Erfindung anhand von Ausführungsbeispielen näher erläutert werden. Es zeigen:

Fig. 1A      das Beispiel eines binären Basisbandsignals mit den zugelassenen Werten +1 und -1;

Fig. 1B      das Basisbandsignal aus Fig. 1A nach der Uebertragung mit den entsprechenden Verzerrungen;

Fig. 2      die schematische Anordnung der Zeitfenster und Subintervalle auf der Zeitachse bei dem erfindungsgemässen Verfahren;

Fig. 3      das Ausführungsbeispiel einer Schaltung zur Ermittlung des Abtastzeitpunktes nach dem erfindungsgemässen Verfahren für ein binäres Basisbandsignal gemäss Fig. 1A, B;

Fig. 4A    die zwei Phasenbereiche minimaler Ausdehnung im Phasenraum für ein binäres CPM-Signal (CPM = $\underline{C}$ ontinuous $\underline{P}$ hase $\underline{M}$ odulation);

Fig. 4B    das Phasenaugendiagramm für ein verzerrtes Signal gemäss Fig. 4A;

Fig. 4C    die Abbildung der beiden Phasenbereiche gemäss Fig. 4B auf einen Phasenbereich minimaler Ausdehnung;

Fig. 5    das Ausführungsbeispiel einer Schaltung zur Taktsynchronisation eines phasenmodulierten Empfangssignals (CPM-Signals).

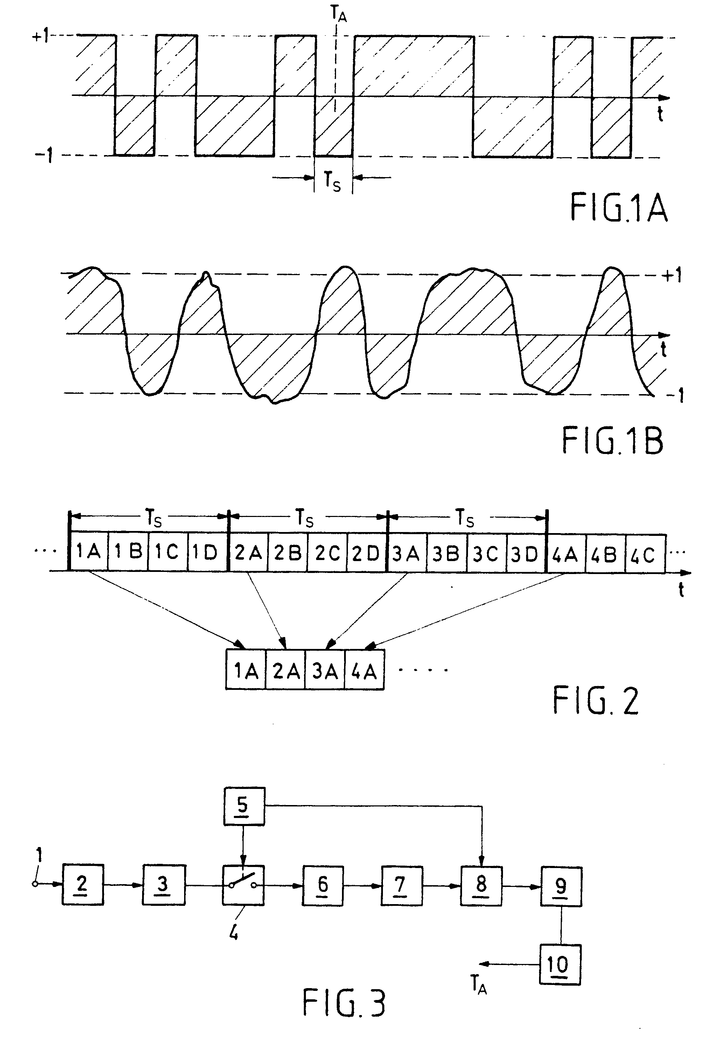

Zur Erläuterung der vorliegenden Erfindung wird von dem in Fig. 1A dargestellten Beispiel eines binären Basisbandsignals ausgegangen, welches die zugelassenen Werte +1 und -1 einnehmen kann, dessen tatsächlicher Signalpegel also beispielsweise zwischen +1V und -1V hin- und herspringt.

Das Basisbandsignal ist unterteilt in eine fortlaufende Folge von Symbolintervallen mit einer Symboldauer $T_S$. Jedes Symbolintervall enthält ein Informationsbit. Um die enthaltene Information aus dem Basisbandsignal zu extrahieren, muss dieses in jedem Symbolintervall wenigstens einmal, nämlich zu einem Abtastzeitpunkt $T_A$ abgetastet werden.

Die Lage des Abtastzeitpunktes $T_A$ innerhalb eines Symbolintervalls ist bei einem unverzerrten und ungestörten Basisbandsignal gemäss Fig. 1A weitgehend ohne Einfluss auf die Fehlerrate der Auswertung. So kann der Abtastzeitpunkt $T_A$, wie in Fig. 1A gzeigt, in der Mitte des Symbolintervalls gelegen sein; er kann aber auch ohne Beeinträchtigung der Auswertequalität an die Grenzen des Symbolintervalls verlegt werden.

Die Wahl des Abtastzeitpunkts $T_A$ innerhalb des Symbolintervalls ist jedoch dann nicht mehr ohne Beeinträchtigung frei wählbar, wenn, wie in Fig. 1B dargestellt, das Basisbandsignal nach der Uebertragung nur noch in verzerrter und verrauschter Form vorliegt. Eine Synchronisation im Empfänger muss dann so vorgenommen werden, dass in den Symbolintervallen der Abtastzeitpunkt $T_A$ eine optimale Lage einnimmt, damit die Auswertungsfehler möglichst gering bleiben.

Die Synchronisation und damit der optimale Abtastzeitpunkt $T_A$ werden gerade dadurch erreicht, dass man die Eigenschaften der optimalen Abtastung, nämlich eine möglichst genaue Extraktion der Information zu ermöglichen, ausnutzt.

Voraussetzung dafür ist zunächst, dass im Empfänger die Länge der Symboldauer $T_S$ bekannt ist. Weiterhin muss vorausgesetzt werden, dass die erzeugende Datensequenz des Basisbandsignals so verwürfelt ist, dass Uebergänge zwischen den zugelassenen Werten, hier +1 und -1, in beliebigen Zeitfenstern weitgehend gleich häufig auftreten.

Zur Ermittlung des optimalen Abtastzeitpunkts $T_A$ wird nun das Basisbandsignal in einer Reihe von N aufeinanderfolgenden Zeitfenstern abgetastet, von denen in Fig. 2 die ersten drei vollständig, das vierte jedoch nur ausschnittsweise wiedergegeben ist.

Jedes Zeitfenster hat eine zeitliche Länge von der Grösse der Symboldauer $T_S$. Jedes Zeitfenster ist weiterhin unterteilt in eine Anzahl von K Subintervallen 1A ... 4C, wobei die Zahl das Zeitfenster bezeichnet und der Buchstabe das Subintervall innerhalb dieses Zeitfensters.

Im Beispiel der Fig. 2 ist K = 4, d.h. vier Subintervalle 1A ... 1D gehören zum ersten Zeitfenster, vier Subintervalle 2A ... 2D gehören zum zweiten Zeitfenster, usw..

Die Anordnung der N Zeitfenster mit ihren N • K Subintervallen muss nun als Zeitrahmen über das auszuwertende Basisbandsignal gelegt gedacht werden. In jedem Subintervall 1A ... 4C wird dann das Basisbandsignal abgetastet.

Wenn das bei der Demodulation des Empfangssignals erhaltene Basisbandsignal der Fig. 1B im Signalpegel so eingestellt ist, dass bei Wegfall der Verzerrungen genau die zugelassenen Werte +1 und -1 eingenommen würden, erhält man bei der Abtastung innerhalb der Subintervalle Abtastwerte, die entweder um +1 und -1 oder dazwischen liegen.

Ist der Abtastwert in einem Subintervall grösser als Null, wird davon ausgegangen, dass er zum zugelassenen Wert +1 zu rechnen ist und die Differenz zwischen Abtastwert und +1 bestimmt. Ist der Abtastwert dagegen kleiner als Null, wird angenommen, dass er dem zugelassenen Wert -1 zuzurechnen ist und die entsprechende Differenz zu diesem Wert festgestellt.

Sind die so bestimmten Differenzen klein, ist die Wahrscheinlichkeit gross, dass das empfangene Basisbandsignal in den zugehörigen Subintervallen auch tatsächlich einen der zugelassenen Werte näherungsweise einnimmt. Sind die Differenzen dagegen gross, ist es wahrscheinlich, dass man sich mit den zugehörigen Subintervallen gerade in einem Uebergangsbereich des Basisbandsignals zwischen den zugelassenen Werten befindet.

Während die Auswertung dieses Abtastprozesses für nur ein Zeitfenster selbst bei hinreichend vielen Subintervallen, d.h. bei feiner Zeitunterteilung, zu unsicheren Ergebnissen führen würde, lässt sich die Bestimmung des optimalen Abtastzeitpunkts $T_A$ relativ sicher gestalten, wenn man die dem Basisband zugrundeliegende Periodizität mit der Symboldauer $T_S$ ausnutzt und über N Zeitfenster derart mittelt, dass immer die Abtastwerte

entsprechender Subinvervalle jedes der N Zeitfenster zusammengefasst werden, wie dies in Fig. 2 mit den Subintervallen 1A, 2A, 3A und 4A schematisch angedeutet ist.

Liegt nun der Zeitrahmen mit den N Zeitfenstern und K • N Subintervallen 1A ... 4C relativ zum Basisbandsignal so, dass in jedem Zeitfenster gerade in den entsprechenden Subintervallen 1A, 2A, 3A, 4A usw. die zugelassenen Werte durch das Basisbandsignal für alle Zeitfenster insgesamt relativ gut angenähert werden, ist die Streuung der Abtastwerte, bezogen auf die zugelassenen Werte, besonders gering. In diesem Fall ist es also optimal, den Abtastzeitpunkt $T_A$ jeweils in das erste Subintervall 1A, 2A, 3A, 4A usw. jedes Zeitfensters zu legen. Ist die Streuung für eine andere Folge von entsprechenden Subintervallen minimal, liegt der optimale Abtastzeitpunkt $T_A$ in diesem Subintervall.

Dass solche Minima in den Streuungswerten überhaupt auftreten, lässt sich an dem Basisbandsignal der Fig. 1B leicht erkennen. Diejenigen Subintervalle, die jeweils auf den Flanken zwischen zwei zugelassenen Werten liegen, geben einen grossen Beitrag zur Streuung, da der Wert des Basisbandsignals in diesem Bereich sehr weit von jedem zugelassenen Wert entfernt ist. Die Streuungswerte sind demnach für diese Subintervalle sehr gross, werden aber um so kleiner, je mehr die Subintervalle in den Bereichen des Basisbandsignals liegen, in denen die zugelassenen Werte näherungsweise eingenommen werden. Es ist also unmittelbar einsichtig, dass eine Folge von Subintervallen mit einer minimalen Streuung existieren muss, die dann zur Bestimmung des optimalen Abtastzeitpunkts herangezogen werden kann.

Wie bereits erwähnt, kann für das Beispiel des Basisbandsignals aus Fig. 1B der optimale Abtastzeitpunkt $T_A$ direkt in jene Subintervalle gelegt werden, deren Abtastwerte die geringste Streuung aufweisen.

Andererseits sind jedoch Modulationsarten denkbar, bei denen die geringste Streuung in Subintervallen auftritt, die gerade in der Nähe des Nulldurchgangs zwischen zwei Symbolen liegen. Hier wird der optimale Abtastzeitpunkt durch eine Verschiebung um $T_S/2$ von diesen Subintervallen aus erreicht.

Besonders einfach ist das Verfahren durchzuführen, wenn alle Subintervalle 1A ... 4C gleich lang sind, d.h. wenn mit einem einzigen Takt abgetastet wird. Dabei ist die Bestimmung des Abtastzeitpunktes $T_A$ und damit die Synchronisation des Signalempfängers innerhalb gewisser Grenzen umso genauer, je kürzer die Subintervalle, d.h. je höher die Abtastfrequenzen gewählt werden.

Eine der Streuung äquivalente Grösse wird auf einfache Weise gemäss einem bevorzugten Ausführungsbeispiel dadurch erhalten, dass die Abweichungen der Abtastwerte von den am nächsten kommenden, zugelassenen Werten bestimmt, dann quadriert und für entsprechende Subintervalle über alle N Zeitfenster aufsummiert werden. Die resultierenden K Summen, die eine Aussage über die Streuung enthalten, werden dann untereinander verglichen und daraus die Folge der Subintervalle mit der kleinsten Streuung ermittelt.

Besonders zuverlässig lässt sich das beschriebene Verfahren durchführen, wenn der Signalverarbeitung im obigen Sinne eine Glättung mittels eines Medianfilters nachgeschaltet ist.

Durch die Mittelung, d.h. durch die Summenbildung über N Zeitfenster, aber auch durch eine etwaige Medianfilterung entsteht eine Verzögerung in der Bestimmung des Abtastzeitpunkts $T_A$. Diese Verzögerung kann mit Vorteil durch eine in den Datenpfad geschaltete Verzögerungsleitung, z.B. eine digitale Verzögerungsleitung so kompensiert werden, dass Takt und Daten aus demselben Signalabschnitt bestimmt werden und damit zueinander passen. Die richtige zeitliche Zuordnung wird erreicht, wenn als Verzögerungszeit eine Zeit von $N • T_S/2$ gewählt wird, so dass der Abtastzeitpunkt auf die zeitliche Mitte des ausgewerteten Signalabschnitts bezogen ist.

Das Blockschaltbild einer beispielhaften Schaltung zur Bestimmung des Abtastzeitpunkts $T_A$ nach dem oben beschriebenen Verfahren ist in Fig. 3 dargestellt. Von einem Signaleingang 1 gelangt das Empfangssignal auf einen Demodulator 2, an dessen Ausgang das empfangene Basisbandsignal gemäss Fig. 1B erscheint. Ein nachfolgender Verstärker 3 stellt den Signalpegel des empfangenen Basisbandsignals so ein, dass im unverzerrten Zustand genau die zugelassenen Werte (z.B. +1V und -1V) eingenommen werden.

Ueber einen von einem Taktgenerator 5 angesteuerten Abtastschalter 4 werden das demodulierte Basisbandsignal in den Subintervallen entsprechenden Zeitintervallen abgetastet und die Abtastwerte in einem A/D-Wandler 6 digitalisiert. Eine nachfolgende Rechenschaltung 7 bestimmt die Abweichungen der Abtastwerte von den nächstliegenden zugelassenen Werten, quadriert diese Abweichungen und leitet die quadrierten Werte an einen Speicher 8 weiter, wo sie für N aufeinanderfolgende Zeitfenster auf insgesamt N • K Speicherplätzen abgespeichert werden.

Gesteuert durch den Taktgenerator 5 werden dann aus dem Speicher 8 die Werte, jeweils nach entsprechenden Subintervallen geordnet, ausgelesen und auf einen Summierer 9 gegeben, der die Summen für jede Gruppe von Subintervallen bildet und zu einem Vergleicher 10 leitet, welcher aus den Summen durch Vergleich die kleinste bestimmt und daraus den optimalen Abtastzeitpunkt

$T_A$ ermittelt.

Ein weiteres Ausführungsbeispiel für das erfindungsgemässe Verfahren geht aus von einem phasenmodulierten Empfangssignal in der Form eines CPM-Signals (CPM = C ontinuous P hase M odulation). Ein solches Signal hält sich zu bestimmten, mit der vorgegebenen Symboldauer $T_S$ periodischen Zeitpunkten in M Phasenbereichen minimaler Ausdehnung im zweidimensionalen Phasenraum auf. Im Extremfall eines binären CPM-Signals ist M = 2. Analog zum Basisbandsignal der Fig. 1B, das sich zu bestimmten, mit $T_S$ periodischen Zeitpunkten in Wertebereichen minimaler Ausdehnung um die zugelassenen Werte +1 und -1 herum aufhält, hält sich das nach obigem Beispiel gewählte CPM-Signal in zwei Phasenbereichen minimaler Ausdehnung auf, z.B. Bereichen um $\pi/2$ und $3\pi/2$ bezogen auf die Referenzphase der unmodulierten Trägerschwingung.

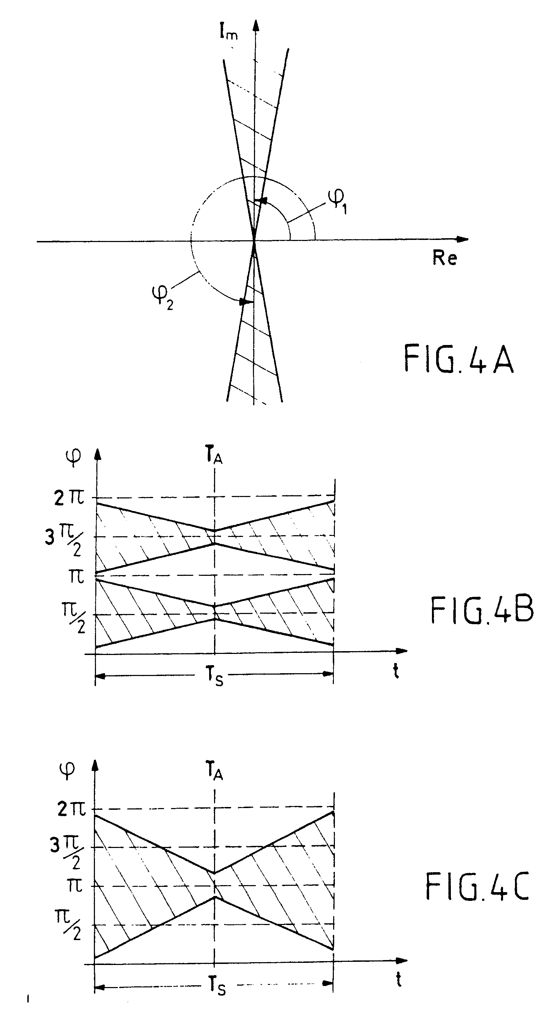

Diese beiden Phasenbereiche minimaler Ausdehnung sind in Fig. 4A in dem durch die reelle und imaginäre Achse aufgespannten zweidimensionalen Phasenraum als schraffierte Bereiche dargestellt. Die Phasen $\phi_1$ und $\phi_2$, in diesem Fall $\pi/2$ und $3\pi/2$, stellen die zugelassenen Phasenwerte dar.

Wenn nun bei einem binären CPM-Signal der genannten Art in demselben Zeitrahmen, wie er in Fig. 2 beispielhaft wiedergegeben ist, die Phasenwerte in den Subintervallen abgetastet werden, streuen auch hier die Abtastwerte, abhängig vom Subintervall, mehr oder weniger stark um die entsprechenden Phasenwerte, wobei wenigstens ein Zeitbereich pro Zeitfenster existiert, in dem die Streuung minimal ist.

Die Streuung der Werte innerhalb eines Zeitfensters der Länge $T_S$ liegt innerhalb bestimmter Gebiete, die in Fig. 4B schraffiert dargestellt sind. Hier ist die Synchronisation zwischen dem Empfangssignal und dem Zeitrahmen gerade so gewählt, dass der Abtastzeitpunkt $T_A$ genau in der Mitte des Zeitfensters liegt. Zugleich stimmt der Abtastzeitpunkt $T_A$ mit dem Minimum der Streuung überein. Die gesamte Darstellung wird als "Phasenaugendiagramm" bezeichnet.

Für Subintervalle am Anfang und am Ende des Zeitfensters streuen hier die Abtastwerte relativ stark um die Phasenwerte $\pi/2$ und $3\pi/2$. Zur Mitte hin nimmt die Streuung ab und erreicht ein Minimum, aus dem der Abtastzeitpunkt $T_A$ bestimmt werden kann. Je nach Lage des Zeitrahmens relativ zum Takt des Empfangssignals kann das Minimum auch ausserhalb der Mitte des Zeitfensters liegen.

Zur Vereinfachung der Signalverarbeitung ist es zunächst zweckmässig, die Mehrzahl von Phasenbereichen minimaler Ausdehnung auf einen Phasenbereich abzubilden, d.h. zu reduzieren. Bei phasenmodulierten Signalen mit M äquidistanten Phasenbereichen, die entsprechend M diskreten Phasenwerten zugeordnet sind, wird eine solche Abbildung dadurch erreicht, dass das Empfangssignal mit der Potenz M potenziert wird, weil dann aus den ursprünglichen Abständen von $2\pi/M$ zwischen den diskreten Phasenwerten Abstände von $2\pi$ werden, so dass alle möglichen Phasenwerte in denselben Phasenbereich fallen.

Entsprechend ergibt sich für das potenzierte Empfangssignal anstelle des Phasenaugendiagramms aus Fig. 4B ein neues Phasenaugendiagramm gemäss Fig. 4C, das nur noch einen schraffierten Bereich umfasst.

Ausgehend von dem potenzierten Empfangssignal wird dann eine Zerlegung in zwei Quadraturzweige vorgenommen, damit skalar die Komponenten des Phasenvektors bestimmt werden können.

Die Abtastung über N Zeitfenster und in N • K Subintervallen erfolgt dann, wie bereits beschrieben, für jeden der Quadraturzweige getrennt. Ebenso werden die Streuungen der Abtastwerte für gleichwertige Subintervalle über die N Zeitfenster für jeden Quadraturzweig separat berechnet. Schliesslich werden die Streuungen aus beiden Quadraturzweigen paarweise zusammengefasst und untereinander verglichen, um die Folge von Subintervallen mit der kleinsten Streuung zu ermitteln und daraus den optimalen Abtastzeitpunkt $T_A$ abzuleiten.

Das Blockschaltbild einer beispielshaften Schaltung zur Verarbeitung eines phasenmodulierten Signals ist in Fig. wiedergegeben. Vom Signaleingang 1 gelangt das Signal mit M äquidistanten Phasenbereichen auf einen Potenzierer 11 mit einem nachgeschalteten Filter 12, in denen die Abbildung der M Phasenbereiche durch Potenzierung mit der Potenz M auf einen Phasenbereich vorgenommen wird.

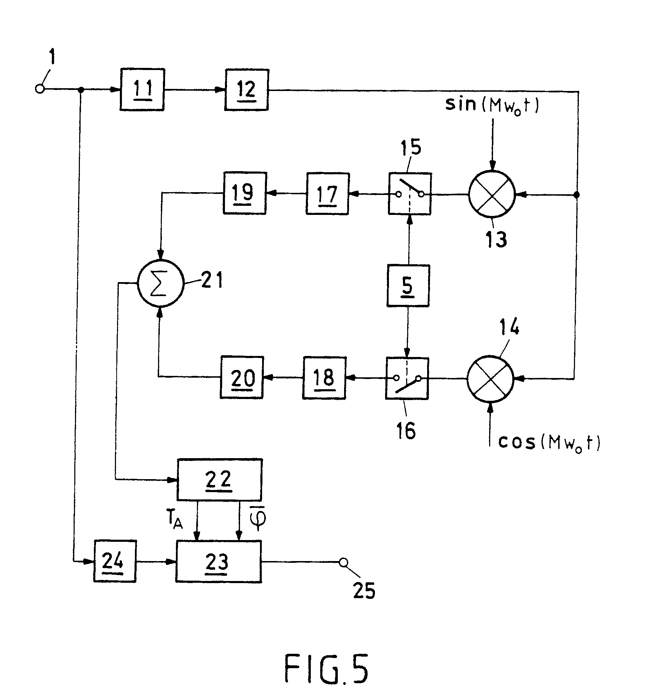

Das so abgebildete Signal wird aufgeteilt und parallel in zwei Multiplizierern 13 und 14 jeweils mit einem Signal proportional zu $\sin(Mw_0t)$ bzw. $\cos(Mw_0t)$ multipliziert, wobei mit $w_0$ die Trägerfrequenz des Empfangssignals bezeichnet ist. Durch die Multiplikation wird das Signal demoduliert und in zwei Quadraturzweige zerlegt, die parallel durch zwei, von einem Taktgenerator 5 angesteuerten Abtastschaltern 15 und 16 abgetastet werden. Hinter den Abtastschaltern 15 und 16 kann wiederum, wie in der Schaltung gemäss Fig. 3, eine A/D-Wandlung vorgesehen werden. Entsprechende A/D-Wandler sind in Fig. 5 der Einfachheit halber weggelassen.

Die Abtastwerte werden in nachfolgenden Speichern 17 und 18 abgelegt. Nachgeschaltete Rechenschaltungen 19 und 20 berechnen für jeden Quadraturzweig die Streuungen, die dann paarweise in einem Summierer 21 zusammengefasst und an eine Auswerteschaltung 22 weitergeleitet werden, in welcher der optimale Abtastzeitpunkt $T_A$ ermittelt und an einen Signaldetektor 23 übermittelt wird. Am Signalausgang 25 kann dann die aus dem Empfangssignal extrahierte Information abgegriffen werden.

Wie bereits erwähnt, tritt bei der Synchronisation eine Verzögerung auf, die im Datenpfad ausgeglichen wird. Zu diesem Zweck ist dem Detektor 23 eine Verzögerungsleitung 24 vorgeschaltet deren Eingang mit dem Signaleingang 1 verbunden ist.

Um ein phasenmoduliertes Signal kohärent demodulieren zu können, muss neben der Taktsynchronisation der Empfänger auch starr an die Referenzphase der Trägerfrequenz angekoppelt werden. Hierzu wird bei einem bevorzugten Ausführungsbeispiel des erfindungsgemässen Verfahrens neben der Streuung in den Quadraturzweigen auch der Mittelwert für entsprechende Subintervalle über die N Zeitfenster berechnet. Auf diese Weise wird für den optimalen Abtastzeitpunkt $T_A$ ein Phasenmittelwert $\overline{\phi}$ zur Verfügung gestellt, der als Phasenoffset gegenüber der Referenzphase der Trägerschwingung verwendet werden kann. Dies ist in der Schaltung nach Fig. 5 dadurch angedeutet, dass die Auswerteschaltung 22 neben dem optimalen Abtastzeitpunkt $T_A$ auch den Phasenmittelwert $\overline{\phi}$ an den Detektor 23 abgibt.

Die Berechnung der Streuungen und der Mittelwerte erfolgt über den Zeitraum von N Zeitfenstern K mal und wird für beide Quadraturzweige getrennt durchgeführt. Dies ergibt eine vergleichsweise lange Rechenzeit, die dann nicht notwendig ist, wenn sich die Abtastwerte nicht sehr stark ändern.

Daher kann es zur Reduktion der benötigten Rechenzeit mit Vorteil vorgesehen werden, bei der Ermittlung der Mittelwerte die letzten berechneten K Mittelwerte jeweils durch Wegfall der ältesten Abtastwerte zu korrigieren und durch die Hinzunahme der neuesten Abtastwerte zu aktualisieren, ohne dass die gesamte Mittelwertbildung wiederholt werden muss.

Eine Aktualisierung der K Streuungen ist andererseits immer dann möglich, wenn die neu gewonnenen Mittelwerte von einem abgespeicherten Referenzmittelwert um weniger als einen vorgegebenen Wert abweichen. Ist die Abweichung jedoch grösser, wird eine Neuberechnung der Streuungen und die Abspeicherung eines neuen Referenzmittelwerts erforderlich.

Insgesamt steht mit dem erfindungsgemässen Verfahren zur Taktsynchronisation eines Signalempfängers ein Verfahren zur Verfügung, welches die sichere und einfache Bestimmung des optimalen Abtastzeitpunktes $T_A$ innerhalb vorgegebener Zeitfenster gestattet, ohne die Signalauswertung

wesentlich zu verzögern.

## Ansprüche

1.  verfahren zur Taktsynchronisation eines Signalempfängers bezüglich eines mit Daten in Form eines Basisbandsignals modulierten Empfangssignals, wobei

    a) das Basisbandsignal im ungestörten Zustand zu bestimmten, mit einer vorgegebenen Symboldauer ($T_S$) periodischen Zeitpunkten eine Mehrzahl von zugelassenen Werten annehmen kann, und wobei die erzeugende Datensequenz derart verwürfelt ist, dass Uebergänge zwischen den zugelassenen Werten in beliebigen Zeitfenstern weitgehend gleich häufig auftreten,

    b) zur Taktsynchronisation das Empfangssignal zunächst demoduliert wird,

    c) in einer Reihe von N aufeinanderfolgenden Zeitfenstern, welche jeweils die Länge einer Symboldauer ($T_S$) aufweisen und in K Subintervalle (1A,...,4C) unterteilt sind, in jedem Subintervall (1A,...,4C) das demodulierte Empfangssignal abgetastet wird,

    d) für entsprechende Subintervalle (1A,...,4C) jedes Zeitfensters über die N Zeitfenster die Streuung der Abtastwerte ermittelt wird und

    e) die ermittelten K Streuungen miteinander verglichen werdem und daraus der Abtastzeitpunkt ($T_A$) innerhalb eines jeden Zeitfensters abgeleitet wird, zu welchem das demodulierte Empfangssignal zur Rückgewinnung der Daten abgetastet werden soll,

    dadurch gekennzeichnet, dass

    f) zum Ermitteln der Streuung der Abtastwerte die Abweichung des demodulierten Empfangssignals von dem jeweils am nächsten liegenden zugelassenen Wert gemessen wird und

    g) aus der zeitlichen Lage des kleinsten dieser Streuungen der Abtastzeitpunkt ($T_A$) abgeleitet wird

2.  Verfahren nach Anspruch 1, dadurch gekennzeichnet, dass

    a) die Subintervalle (1A,...,4C) gleich lang sind,

    b) zum Ermitteln der Streuung der Abtastwerte die gemessenen Abweichungen quadriert werden und

    c) die quadrierten Abweichungen für entsprechende Subintervalle (1A,..,4C) über die N Zeitfenster aufsummiert und zur Ableitung des Abtastzeitpunktes ($T_A$) die K Summen miteinander verglichen werden.

3.  Verfahren nach Anspruch 2, dadurch gekennzeichnet, dass

    a) das Basisbandsignal ein binäres Signal mit den zugelassenen Werten +1 und -1 ist;

    b) das Empfangssignal nach der Demodulation in jedem Subintervall (1A ... 4C) abgetastet und digitalisiert wird; und

    c) bei positiven Abtastwerten die Differenz zu +1, und bei negativen Abtastwerten die Differenz zu -1 gebildet und die Differenzen als Abweichungen zur Bestimmung des Abtastzeitpunkts ($T_A$) verwendet werden.

4.  Verfahren nach Anspruch 1, dadurch gekennzeichnet, dass die durch die Ermittlung des Abtastzeitpunkts ($T_A$) verursachte Verzögerung durch eine entsprechende Verzögerungsleitung (24) im Datenpfad ausgeglichen wird und die Verzögerungsdauer $N \bullet T_S/2$ beträgt.

5.  Verfahren nach Anspruch 1, dadurch gekennzeichnet, dass

    a) das Empfangssignal ein phasenmoduliertes Signal ist, welches sich zu bestimmten, mit der vorgegebenen Symboldauer ($T_S$) periodischen Zeitpunkten entsprechend in M Phasenbereichen minimaler Ausdehnung im zweidimensionalen Phasenraum aufhält;

    b) das Empfangssignal so bearbeitet wird, dass die M Phasenbereiche minimaler Ausdehnung auf einen Phasenbereich abgebildet werden;

    c) zur skalaren Signalverarbeitung das Empfangssignal in zwei Quadraturzweige zerlegt wird;

    d) in den Subintervallen (1A ... 4C) jeder Quadraturzweig für sich abgetastet und aus den Abtastwerten die Streuung berechnet wird; und

    e) die so gebildeten K Streuungswerte von beiden Quadraturzweigen paarweise zusammengefasst und anschliessend verglichen werden.

6.  Verfahren nach Anspruch 5, dadurch gekennzeichnet, dass die M Phasenbereiche minimaler Ausdehnung äquidistant sind, und die Abbildung auf einen Phasenbereich durch eine Potenzierung des Empfangssignals mit der Potenz M erfolgt.

7.  Verfahren nach Anspruch 5, dadurch gekennzeichnet, dass als Abtastzeitpunkt ($T_A$) derjenige Zeitpunkt verwendet wird, der dem Subintervall mit der geringsten Streuung zugeordnet ist.

8.  Verfahren nach Anspruch 5, dadurch gekennzeichnet, dass ein Abtastzeitpunkt ($T_A$) verwendet wird, der demjenigen Zeitpunkt gegenüber, welcher dem Subintervall mit der geringsten Streuung zugeordnet ist, um die Hälfte der Symboldauer ($T_S$) verschoben ist.

9.  Verfahren nach Anspruch 5, dadurch gekennzeichnet, dass neben der Streuung der Abtastwerte entsprechender Subintervalle (1A ... 4C) von N Zeitfenstern auch jeweils der Mittelwert für die entsprechend zusammengefassten N Abtastwerte gebildet wird und der zum Abtastzeitpunkt ($T_A$) gehörende Mittelwert als Phasenoffset gegenüber der Trägerfrequenz ($w_o$) des Empfangssignals mit ihrer Referenzphase verwendet wird.

10. Verfahren nach Anspruch 9, dadurch gekennzeichnet, dass zur Reduktion der Rechenzeit bei der Ermittlung der Mittelwerte die Mittelwerte abgespeichert werden und die letzten K Mittelwerte jeweils durch den Wegfall der ältesten Abtastwerte korrigiert und durch die Hinzufügung der neuesten Abtastwerte aktualisiert werden.

## Claims

1.  Method for clock synchronization of a signal receiver with respect to a received signal modulated with data in the form of a baseband signal, in which method

    a) the baseband signal, in the undisturbed state, can assume a plurality of permitted values at particular points of time which are periodically related to a predetermined symbol duration ($T_S$), and in which method the generating data sequence is scrambled in such a manner that transitions between the permitted values largely occur with the same frequency within arbitrary time windows,

    b) for clock synchronization, the received signal is first demodulated;

    c) in each subinterval (1A ... 4C) in a number of N successive time windows which have in each case the length of one symbol duration ($T_S$) and are subdivided into K subintervals (1A ... 4C) the demodulated received signal is sampled;

    d) the dispersion of the sampled values over the N time windows is determined for corresponding subintervals (1A ... 4C) of each time window; and

e) the K dispersions determined are compared with each other and from this the sampling time ($T_A$) within each time window is derived at which the demodulated received signal is to be sampled for recovering the data characterized in that

f) for determining the dispersion of the sampled values, the deviation of the demodulated received signal from the permitted value which is nearest in each case is measured and

g) the sampling time ($T_A$) is derived from the position in time of the smallest of these dispersions.

2. Method according to Claim 1, characterized in that

a) the subintervals (1A ... 4C) are of equal length;

b) for determining the dispersion of the sampled values, the measured deviations are squared and

c) the squared deviations for corresponding subintervals (1A ... 4C) are summed over the N time windows and, for deriving the sampling point ($T_A$), the K sums are compared with each other.

3. Method according to Claim 2, characterized in that

a) the baseband signal is a binary signal with the permitted values +1 and -1;

b) the received signal, after demodulation, is sampled and digitized in each subinterval (1A ... 4C); and

c) in the case of positive sampled values, the difference to +1 and, in the case of negative sampled values, the difference to -1 is formed and the differences are used as deviations for determining the sampling time ($T_A$).

4. Method according to Claim 1, characterized in that the delay caused by the determination of the sampling time ($T_A$) is compensated by a corresponding delay line (24) in the data path and the duration of delay is N . $T_S/2$.

5. Method according to Claim 1, characterized in that

a) the received signal is a phase-modulated signal which, at particular points of time periodically related to the predetermined symbol duration ($T_S$) is correspondingly located in M phase regions of minimum extent in the two-dimensional phase space;

b) the received signal is processed in such a manner that the M phase regions of minimum extent are imaged to one phase region;

c) the received signal is split into two quadrature branches for scalar signal processing;

d) each quadrature branch is separately sampled in the subintervals (1A ... 4C) and the dispersion is calculated from the sampled values; and

e) the K dispersion values of both quadrature branches, thus formed, are combined in pairs and are subsequently compared.

6. Method according to Claim 5, characterized in that the M phase regions of minimum extent are equidistant and the imaging to one phase region is effected by raising the received signal to the power of M.

7. Method according to Claim 5, characterized in that the point of time associated with the subinterval having the least dispersion is used as sampling time ($T_A$).

8. Method according to Claim 5, characterized in that a sampling time ($T_A$) is used which is displaced by one half of the symbol duration ($T_S$) with respect to the point of time associated with the subinterval having the least dispersion.

9. Method according to Claim 5, characterized in that in addition to the dispersion of the sampled values of corresponding subintervals (1A ... 4C) of N time windows, the mean value is also formed in each case for the correspondingly combined N sampled values and the mean value belonging to the sampling time ($T_A$) is used as phase offset with respect to the carrier frequency ($W_0$) of the received signal with its reference phase.

10. Method according to Claim 9, characterized in that the mean values are stored for reducing the computing time during determination of the mean values and the last K mean values are in each case corrected by omitting the oldest sampled values and are updated by adding the latest sampled values.

**Revendications**

1. Procédé pour la synchronisation d'horloge d'un récepteur de signal par rapport à un signal de réception modulé par des données ayant la forme d'un signal en bande de base, dans lequel :

a) le signal en bande de base, à l'état non perturbé, peut prendre une pluralité de valeurs autorisées à des instants périodiques déterminés d'une durée de symbole prédéfinie ($T_S$), et la séquence de données à produire est hachée d'une manière telle que des transitions entre les valeurs autorisées se présentent à des fréquences en substance égales dans des fenêtres de temps quelconques,

b) pour la synchronisation d'horloge, le signal de réception est initialement démodulé,

c) dans une série de N fenêtres de temps successives, qui ont chacune la longueur d'une durée de symbole ($T_S$) et sont subdivisées en K sous-intervalles (1A ... 4C), le signal de réception démodulé est échantillonné dans chaque sous-intervalle (1A ... 4C),

d) pour des sous-intervalles (1A ... 4C) correspondants de chaque fenêtre de temps, la dispersion des valeurs d'échantillonnage est déterminée sur les N fenêtres de temps, et

e) les K dispersions déterminées sont comparées l'une à l'autre et l'instant d'échantillonnage ($T_A$), à l'intérieur de chaque fenêtre de temps, auquel le signal de réception démodulé doit être échantillonné en vue de la récupération des données, en est dérivé,

caractérisé en ce que :

f) pour la détermination de la dispersion des valeurs d'échantillonnage, l'écart du signal de réception démodulé de la valeur autorisée respectivement la plus proche est mesuré, et

g) l'instant d'échantillonnage ($T_A$) est dérivé de la position dans le temps de la plus petite de ces dispersions.

2. Procédé suivant la revendication 1, caractérisé en ce que :

a) les sous-intervalles (1A ... 4C) sont de longueurs égales,

b) pour déterminer la dispersion des valeurs d'échantillonnage, les écarts mesurés sont élevés au carré, et

c) les écarts élevés au carré, pour des sous-intervalles correspondants (1A ... 4C), sont sommés sur les N fenêtres de temps et, pour la dérivation de l'instant d'échantillonnage ($T_A$), les K sommes sont comparées l'une à l'autre.

3. Procédé suivant la revendication 2, caractérisé en ce que :

a) le signal en bande de base est un signal binaire présentant les valeurs autorisées +1 et -1,

b) le signal de réception, après la démodulation, est échantillonné dans chaque sous-intervalle (1A ... 4C) et est numérisé, et

c) dans le cas de valeurs d'échantillonnage positives, la différence est ramenée à +1 et, dans le cas de valeurs d'échantillonnage négatives, cette différence est ramenée à -1 et les différences sont utilisées en tant qu'écarts pour la détermination de l'instant d'échantillonnage ($T_A$).

4. Procédé suivant la revendication 1, caractérisé en ce que le retard provoqué par la détermination de l'instant d'échantillonnage ($T_A$) est compensé par une ligne à retard correspondante (24) dans le chemin de données et la durée du retard est de $N.T_S/2$.

5. Procédé suivant la revendication 1, caractérisé en ce que :

a) le signal de réception est un signal modulé en phase qui, d'une manière correspondant à des instants périodiques déterminés de la durée de symbole prédéfinie ($T_S$), se maintient dans M domaines de phase d'extension minimale dans l'espace de phase bidimensionnel,

b) le signal de réception est traité de telle façon que les M domaines de phase d'extension minimale soient réduits à un seul domaine de phase,

c) en vue du traitement de signal scalaire, le signal de réception est divisé en deux branches en quadrature,

d) dans les sous-intervalles (1A ... 4C), chaque branche en quadrature est échantillonnée en soi et la dispersion est calculée à partir des valeurs d'échantillonnage, et

e) les K valeurs de dispersion ainsi formées des deux branches en quadrature sont groupées par paire et sont ensuite comparées.

6. Procédé suivant la revendication 5, caractérisé en ce que les M domaines de phase d'extension minimale sont équidistants et la réduction à un seul domaine de phase est effectuée par une élévation du signal de réception à la puissance M.

7. procédé suivant la revendication 5, caractérisé en ce qu'à titre d'instant d'échantillonnage ($T_A$), on utilise l'instant qui est attribué au sous-intervalle présentant la dispersion la plus faible.

8. Procédé suivant la revendication 5, caractérisé en ce qu'on utilise un instant d'échantillonnage ($T_A$) qui est décalé de la moitié de la durée de symbole ($T_S$) par rapport à l'instant qui est attribué au sous-intervalle présentant la dispersion la plus faible.

9.  Procédé suivant la revendication 5, caractérisé en ce qu'en plus de la dispersion des valeurs d'échantillonnage de sous-intervalles correspondants (1A ... 4C) de N fenêtres de temps, on forme également chaque fois la valeur moyenne pour les N valeurs d'échantillonnage groupées de manière correspondante et on utilise la valeur moyenne appartenant à l'instant d'échantillonnage ($T_A$) à titre de déphasage par rapport à la fréquence porteuse ($W_O$) du signal de réception avec sa phase de référence.

10. Procédé suivant la revendication 9, caractérisé en ce que, en vue de la réduction du temps de calcul lors de la détermination des valeurs moyennes, ces valeurs moyennes sont stockées et les K dernières valeurs moyennes sont chacune corrigées par la suppression des valeurs d'échantillonnage les plus anciennes et sont actualisées par l' incorporation des valeurs d'échantillonnage les plus récentes.

FIG.1A

FIG.1B

FIG.2

FIG.3

FIG.4A

FIG.4B

FIG.4C

FIG.5